# EUROPÄISCHE PATENTSCHRIFT

(11) **EP 0 723 796 B1**
(45) Veröffentlichungstag und Bekanntmachung des Hinweises auf die Patenterteilung: **21.06.2006**
(21) Anmeldenummer: 95117736.9
(22) Anmeldetag: 10.11.1995
(51) Int. Cl.: B01D 29/21, F02M 37/22

(54) **Flüssigkeitsfilter**
Liquid filter
Filtre de liquide

(30) Priorität: 24.01.1995 DE 19502020
(43) Veröffentlichungstag der Anmeldung: 31.07.1996
(73) Patentinhaber: Mann + Hummel GmbH, 71638 Ludwigsburg (DE)
(72) Erfinder: Ernst, Volker, D-74343 Sachsenheim (DE); Jainek, Herbert, D-74074 Heilbronn (DE); Klotz, Arthur, D-71686 Remseck (DE)
(74) Vertreter: Voth, Gerhard

(56) Entgegenhaltungen:
- WO-A-92/17262
- DE-A- 4 430 341
- DE-U- 8 714 656
- DE-U- 9 312 856
- FR-A- 2 259 636

## Beschreibung

Die Erfindung betrifft ein Flüssigkeitsfilter nach dem Hauptanspruch.

Aus der EP 0 319 518 ist ein ölfilter für die Reinigung von Schmieröl, insbesondere für Verbrennungsmotoren bekannt. Bei diesem befindet sich in einem Filtergehäuse mit einem Schraubdeckel eine ölfilterpatrone. Die ölfilterpatrone ist an dem Schraubdeckel verrastet, wobei der Schraubdeckel in das Filterinnere vorragende Federzungen mit Rastvorsprüngen aufweist. Die Filterpatrone besitzt an ihrem deckelseitigen Ende eine kreisförmige, zu den Rastvorsprüngen passende, taillierte Rastausnehmung.

Ein Nachteil dieser Anordnung ist darin zu sehen, daß die Filterpatrone mit einer geeigneten Endscheibe versehen sein muß, wobei die Endscheibe einerseits eine Abdichtung der Filterpatrone vornimmt, andererseits mit den Rastelementen versehen ist. Außerdem trägt die Filterpatrone gemäß des Standes der Technik einen Stützkörper in Form eines metallischen Stützrohres. Solche Filterpatronen sind in regelmäßigen Abständen auszuwechseln, da ihr Durchflußwiderstand aufgrund des anlagerten Schmutzes ansteigt. Die ausgetauschte Filterpatrone muß entsprechend entsorgt werden. Hierzu fallen, da es sich um eine Vielzahl unterschiedlicher Materialien handelt, hohe Entsorgungskosten an.

Es ist weiterhin aus dem DE-GM 93 12 856 ein Umrüstsatz für ein Fluidfilter bekannt. Bei diesem besteht die Filterpatrone lediglich aus einem Papierfiltereinsatz mit Endscheiben. Anstelle eines an der Filterpatrone angeordneten Stützkörpers ist ein Stützrohr vorgesehen, das an dem Deckel des Flüssigskeitsfilters befestigt ist. Ein Nachteil dieser Anordnung ist jedoch darin zu sehen, daß das Stützrohr lediglich an dem Deckel aufgesteckt ist. Es besteht die Gefahr, daß beim Entfernen einer Filterpatrone gleichzeitig das Stützrohr mit entfernt wird und dann nachträglich beschafft werden muß.

Ein ähnliches Flüssigkeitsfilter wird auch in der WO 92/17262 beschrieben.

Der Erfindung liegt die Aufgabe zugrunde, ein umweltfreundliches Flüssigkeitsfilter zu schaffen, ben dem die Filterpatrone problemlos entsorgt werden kann und welches gewährleistet, daß die nicht auszutauschenden Teile unverlierbar an den Gehäuseteilen befestigt sind.

Diese Aufgabe wird durch die des Hauptanspruchs.

Der Vorteil der erfinderischen Idee liegt darin, daß durch die Rastzungen zwar ein Einrasten des Stützrohres an dem Deckel oder dem Boden des Filtergehäuses einfach durchzuführen ist. Die besondere Gestaltung mit Führungsflächen sorgt jedoch dafür, daß ein Auseinandernehmen bzw. ein Abtrennen des Stützrohres von Deckel oder Boden nahezu unmöglich ist.

Gemäß der Erfindung sind die Führungsflächen mit sogenannten Einlaufbereichen versehen, d.h. die Rastzungen werden in ihre Endposition geführt, so daß ein Verbiegen oder eine unsachgemäße Befestigung des Stützrohres ausgeschlossen ist.

In einer weiteren Ausgestaltung der Erfindung ist innerhalb des Stützrohres ein Überdruckventil vorgesehen. Dieses Überdruckventil hat die Aufgabe, bei einer vollständig verschmutzten Filterpatrone oder bei einem kurzzeitigen Betriebszustand, in dem sehr zähflüssiges Öl durch das Filter gepumpt wird, das einströmende Öl unmittelbar dem ölablaß zuzuführen, damit die Schmierung des Motors nicht unterbrochen wird.

In vorteilhafter Weise kann dieses Überdruckventil mittels eines Dichtrings an dem Stützrohr aufgesteckt sein. Es besteht auch die Möglichkeit, das Überdruckventil unmittelbar mit dem Stützrohr zu verschweißen, beispielsweise mittels Reib- oder Ultraschallschweißverfahren.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigt:
- Figur 1: die Schnittdarstellung des oberen Bereichs eines Flüssigkeitsfilters,
- Figur 2: die Schnittdarstellung des oberen Bereichs eines Flüssigkeitsfilters in einer Variante.

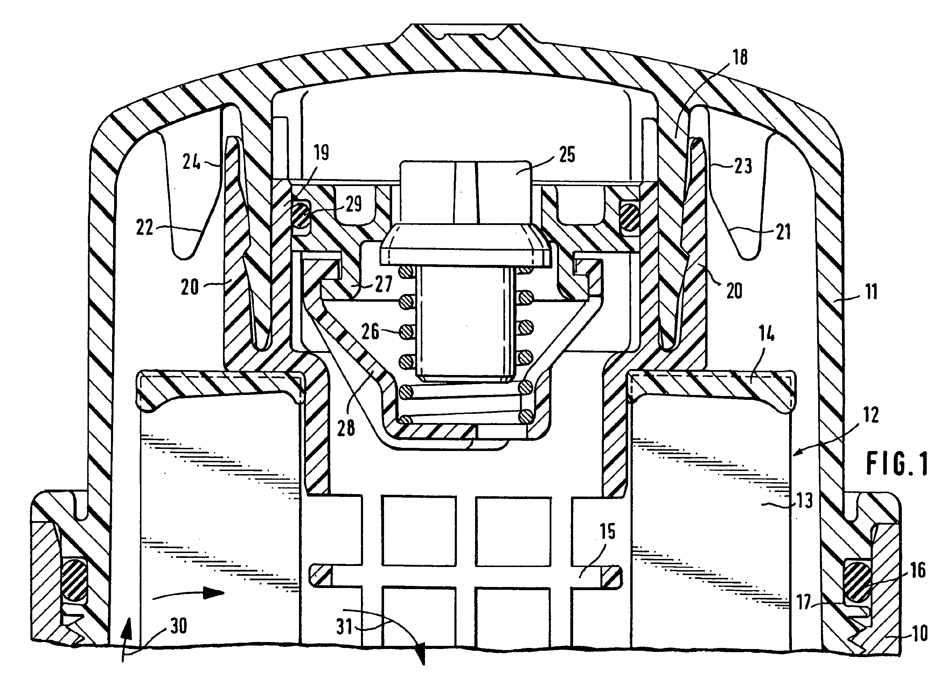

Ein Flüssigkeitsfilter gemäß Figur 1 besteht aus einem Filtergehäuse 10, welches mit einem Deckel 11 verschlossen ist. Im Gehäuse befindet sich eine konzentrisch angeordnete

Filterpatrone 12, die aus einem zickzackförmig gefalteten Filterpapier 13 und stirnseitigen Endscheiben 14 besteht. Die Filterpatrone 12 umschließt ein Stützrohr 15 und liegt mit ihrer Endscheibe 14 abdichtend an dem Stützrohr 15 an. Der Deckel 11 ist mittels eines Schraubgewindes mit dem Filtergehäuse 10 verbunden. Zur Abdichtung liegt im Verbindungsbereich ein 0-Ring 16 in einer entsprechenden Nut 17. Zur Befestigung des Stützrohrs 15 an dem Deckel 11 weist der Deckel Rastzungen 18 auf. Das Stützrohr hat im Bereich der Rastzungen eine ringförmige Anlagefläche 19, sowie mit den Rastzungen in Eingriff bringbare weitere Rastzungen 20. Beim Aufschieben des Stützrohres auf den Deckel 11 werden die Rastzungen 20 durch Führungsflächen 21, 22 abgestützt. Diese Führungsflächen münden in einen Haltebereich 23, 24, welcher verhindert, daß nach dem Einrasten des Stützkörpers 15 an dem Deckel 11, dieser wieder von dem Deckel gelöst werden kann. Ein Lösen des Stützkörpers 15 von dem Deckel 11 ist allenfalls durch das Aufbringen sehr hoher Zugkräfte möglich. Durch die Anordnung der Führungsflächen und der Haltebereiche ist sichergestellt, daß beim Lösen der Filterpatrone 14 vom Stützkörper sich dieser nicht von dem Deckel trennen kann. Andererseits ist gewährleistet, daß der Stützkörper in einfacher Weise am Deckel einrastet. Innerhalb des Stützkörpers 15 befindet sich ein Überdruckventil. Dieses besteht aus einem Ventilkörper 25, einer Ventilfeder 26, sowie einem zweiteiligen Ventilgehäuse 27, 28. Das Ventilgehäuse 27 ist mittels eines 0-Rings 29 an der Anlagefläche 19 befestigt. Selbstverständlich besteht auch die Möglichkeit, das Ventilgehäuse mit dem Stützrohr bzw. Stützkörper mittels Ultraschall zu verschweißen.

Das zu reinigende Ö1 strömt von unten durch einen hier nicht dargestellten öleinlaß gemäß dem Pfeil 30 durch die Filterpatrone, wird dort gereinigt und verläßt über das Mittelrohr und einen Ölauslaß gemäß Pfeil 31 das Flüssigkeitsfilter. Falls die Filterpatrone verschmutzt und kein rechtzeitiger Austausch erfolgt ist, kann das öl über das Überdruckventil zwischen den Rastzungen 18 hindurch von außen in den Innenbereich und damit durch das Stützrohr 15 nach unten.

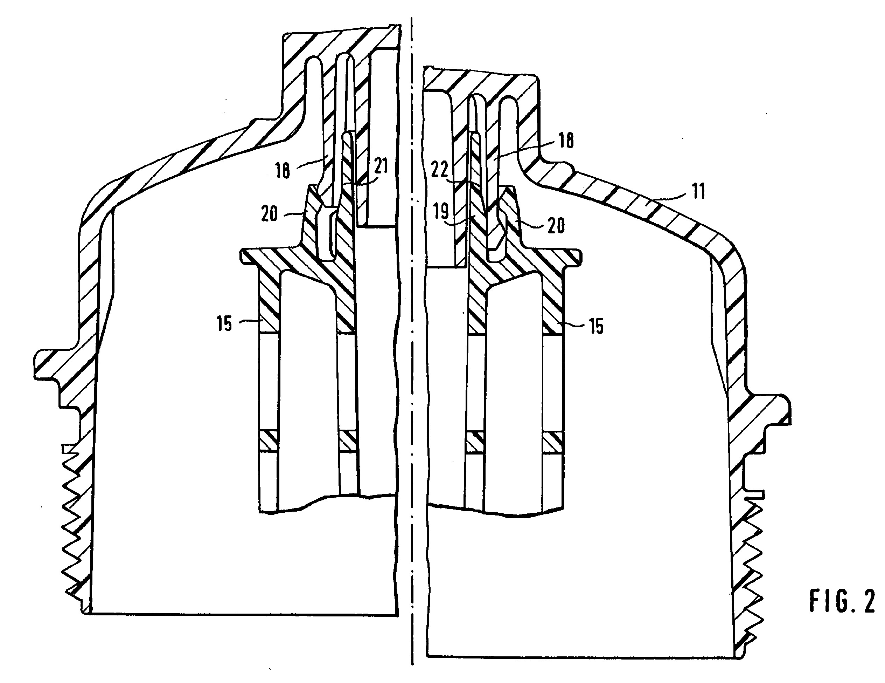

Figur 2 zeigt eine Variante des oberen Bereichs eines Flüssigkeitsfilters. Das Stützrohr 15 weist ebenfalls Rastzungen 20 auf, sowie Anlageflächen 19. Der Deckel 11 greift mit seinen Rastzungen 18 zwischen die Anlageflächen 19 und die Rastzungen 20, so daß auch hier ein zuverlässiges Verrasten des Stützrohrs 15 an dem Deckel 11 gewährleistet ist. Auch die Anlageflächen 19 sind mit Führungsflächen 21, 22 ausgestattet. Zur Verbesserung der Haltewirkung sind die Rastzungen des Deckels aus einem Kunststoff hergestellt, der einen höheren Elastizitätsmodul aufweist als die Rastzungen des Stützrohrs. Dies bedeutet, daß die Haltezungen des Stützrohres eine hohe Steifigkeit aufweisen. Selbstverständlich kann diese hohe Steifigkeit auch durch entsprechende geometrische Gestaltung erzielt werden.

Auf dem links der Mittellinie gezeigten Halbschnittes der Figur 2 befindet sich däs Stützrohr 15 noch nicht in seiner Endstellung. Es ist ersichtlich, daß die Rastzunge 18 an der Führungsfläche 21 entlanggleitet und aufgrund der Form der Führungsfläche vor dem Einschnappen sich nach innen durchbiegt, um den Widerstand zwischen Rastzunge 20 und Führungsfläche 21 zu überwinden. Damit wird eine äußerst zuverlässige Rastverbindung hergestellt.

Die Rastzunge 18 wird durch die Rastzunge 20 während des Rastvorgangs nach innen verformt. Durch die Einführungsschräge 21 wird die steife Rastzunge 20 über die weiche Rastzunge 18. aufgeweitet. Nach Verschnappen, d. h. im Einsatz, ist die Verbindung spannungsfrei. Ein Fließen des Kunststoffes aufgrund hoher Temperaturen erfolgt nicht.

Beim öffnen des Flüssigkeitsfilters sorgt die Verrastung dafür, daß die Drehbewegung des Deckels nicht in eine Drehbewegung der Filterpatrone 12 umgesetzt wird, sondern lediglich eine axiale Bewegung der Filterpatrone und des Stützrohres 15 erfolgt.

### Bezugszeichenliste

- 10: Filtergehäuse
- 11: Deckel
- 12: Filterpatrone
- 13: Filterpapier
- 14: Endscheibe.
- 15: Stützrohr
- 16: 0-Ring
- 17: Nut
- 18: Rastzungen
- 19: Anlagefläche
- 20: Rastzungen
- 21: Führungsfläche
- 22: Führungsfläche
- 23: Haltebereich
- 24: Haltebereich
- 25: Ventilkörper
- 26: Ventilfeder
- 27: Ventilgehäuse
- 28: Ventilgehäuse
- 29: 0-Ring
- 30: Pfeil
- 31: Pfeil

## Patentansprüche

1. Flüssigkeitsfilter, insbesondere für die Reinigung von Schmieröl für Verbrennungsmotoren von Kraftfahrzeugen, bestehend aus einem Filtergehäuse (10) mit einem Schraubdeckel (11), mit einer in dieses Filtergehäuse (10) eingesetzten ringförmigen Patrone (12), femer mit einem Öleinlass für das zu reinigende Öl, mit einem mit dem zentralen Innenbereich des Filtergehäuses (10) verbundenen Ölauslass für gereinigtes Öl, wobei die Filterpatrone (12) auf einem Stützrohr (15) aufgeschoben ist und das Stützrohr (15) am Deckel (11) oder Boden des Filtergehäuses (10) verrastet ist, wobei an Deckel (11) oder Boden (10) Rastzungen (18) angeordnet sind, welche mit Rastzungen (20) des Stützrohres (15) in Eingriff gebracht sind, wobei die Rastzungen (18, 20) jeweils Rastnasen aufweisen, die jeweils in Längsrichtung der Rastzungen (18, 20) unter einem stumpfen Winkel derart gegensinnig abgeschrägt sind, dass die Rastnasen mit ihren schrägen Flächen zueinander gewandt sind und wobei für die Rastzungen (18, 20) wenigstens eines Elementes Stützrohr (15) und Deckel (11) oder Boden (10) Führungsflächen (21, 22) vorgesehen sind, wobei die Führungsflächen *(21, 22)* in einen Haltebereich (23, 24) münden, welcher verhindert, dass nach dem Einrasten des Stützrohres (15) an dem Deckel (11) dieses vom Deckel *(11)* gelöst werden kann.

2. Flüssigkeitsfilter nach Anspruch 1, **dadurch gekennzeichnet, dass** die Rastzungen eines Elements eine gegenüber den Rastzungen des weiteren Elements höhere Elastizität aufweisen.

3. Flüssigkeitsfilter nach Anspruch 2, **dadurch gekennzeichnet, dass** die Rastzungen eines Elements aus einem weichelastischen und die Rastzungen des weiteren Elements aus einem hartelastischen Werkstoff bestehen.

4. Flüssigkeitsfilter nach Anspruch 2, **dadurch gekennzeichnet, dass** die Elastizitätsunterschiede der Rastzungen aufgrund der geometrischen Gestaltung derselben erzielt werden.

5. Flüssigkeitsfilter nach Anspruch 1 oder 2, **dadurch gekennzeichnet, dass** die Führungsflächen (21, 22) Einlaufbereiche aufweisen.

6. Flüssigkeitsfilter nach einem der vorherigen Ansprüche, **dadurch gekennzeichnet, daß** in dem Stützrohr (15) ein Überdruckventil (25 - 28) angeordnet ist.

7. Flüssigkeitsfilter nach Anspruch 6, **dadurch gekennzeichnet, dass** das Überdruckventil (25 - 28) ein Dichtelement (29) aufweist und mittels des Dichtelements oder mittels Schweißverbindung an dem Stützrohr (15) flüssigkeitsdicht befestigt ist.

8. Flüssigkeitsfilter nach Anspruch 1, **dadurch gekennzeichnet, dass** an dem Stützrohr (15) eine ringförmige Anlagefläche (19) vorgesehen ist, an welcher sich die Rastelemente (18) des Deckels-(11) abstützen und an dem Deckel (11) Führungsflächen (21, 22) mit einem Einlaufbereich vorgesehen sind, an welchen sich die Rastzungen des Stützrohres (15) abstützen.

## Claims

1. Fluid filter, more especially for the filtering of lubricating oil for internal combustion engines of motor vehicles, said fluid filter comprising a filter housing (10) with a screw cover (11), an annular cartridge (12) inserted into this filter housing (10), in addition an oil inlet for the oil to be filtered and an oil outlet connected to the central inner region of the filter housing (10) for filtered oil, wherein the filter cartridge (12) is pushed onto a supporting tube (15) and the supporting tube (15) is locked to the cover (11) or bottom of the filter housing (10), wherein locking tongues (18) are disposed on the cover (11) or the bottom (10) and these locking tongues (18) engage with locking tongues (20) of the supporting tube (15), wherein the locking tongues (18, 20) each include locking projections, each of which are inclined in opposite directions in the longitudinal direction of the locking tongues (18, 20) at an obtuse angle in such a manner that the locking projections face one another with their inclined faces and wherein for the locking tongues (18, 20) of at least one element supporting tube (15) and cover (11) or bottom (10), guide faces (21, 22) are provided, wherein the guide faces (21, 22) extend into a retaining region (23, 24), which prevents them from being able to become detached from the cover once the supporting tube (15) is locked to the cover (11).

2. Fluid filter according to claim 1, **characterised in that** the locking tongues of one element include a resilience which is greater than that of the locking tongues of the other element.

3. Fluid filter according to claim 2, **characterised in that** the locking tongues of one element are produced from a soft resilient material and the locking tongues of the other element are produced from a hard resilient material.

4. Fluid filter according to claim 2, **characterised in that** the differences in resilience of the locking tongues is achieved on account of the geometric development of the same.

5. Fluid filter according to claim 1 or 2, **characterised in that** the guide faces (21, 22) include inlet regions.

6. Fluid filter according to one of the preceding claims, **characterised in that** a pressure-relief valve (25 - 28) is disposed in the supporting tube (15).

7. Fluid filter according to claim 6, **characterised in that** the pressure-relief valve (25 - 28) includes a sealing element (29) and is secured to the support tube (15) so as to be sealed against fluid by means of the sealing element or by means of a welding connection.

8. Fluid filter according to claim 1, **characterised in that** an annular bearing face (19) is provided on the support tube (15), the locking elements (18) of the cover (11) being supported on said bearing face (19), and guide faces (21, 22) with an inlet region are provided on the cover (11) the locking tongues of the support tube (15) being supported on said guide faces (21, 22).

## Revendications

1. Filtre à liquide, en particulier pour l'épuration d'huile de graissage de moteurs à combustion interne de véhicules automobiles, constitué d'un boîtier de filtre (10) et d'un couvercle vissé (11), avec une cartouche (12) de forme annulaire logée dans ce boîtier (10), une entrée pour l'huile à épurer et une sortie de l'huile épurée reliée à la zone centrale interne du boîtier (10), la cartouche de filtration (12) étant glissée sur un tube de soutien (15) qui est fixé sur le couvercle (11) ou sur le boîtier de filtre (10),
**caractérisé en ce que**
- sur le couvercle (11) ou sur le fond du boîtier (10) se trouvent des languettes d'arrêt (18) qui sont amenées en prise avec les languettes d'arrêt (20) du tube de soutien (15), les languettes d'arrêt (18, 20) présentant chacune des ergots d'arrêt qui, dans la direction longitudinale de celles-ci, sont inclinés dans des sens opposés, en se faisant face par leurs portées inclinées,
- pour les languettes d'arrêt (18, 20), d'au moins un élément tel que le tube de soutien (18), le couvercle (11) ou le fond (10), il est prévu des portées de guidage (21, 22) qui débouchent dans une zone de maintien (23, 24) empêchant qu'après son blocage sur le couvercle (11), le tube de maintien (15) puisse se dégager de celui-ci.

2. Filtre à liquide selon la revendication 1,
**caractérisé en ce que**
les languettes d'arrêt d'un élément présentent par rapport aux languettes d'arrêt de l'autre élément une élasticité supérieure.

3. Filtre à liquide selon la revendication 2,
**caractérisé en ce que**
les languettes d'arrêt d'un élément sont faites d'un matériau élastique mou, tandis que les languettes d'arrêt de l'autre élément sont faites d'un matériau élastique dur.

4. Filtre à liquide selon la revendication 2,
**caractérisé en ce que**
les différences d'élasticité des languettes d'arrêt sont obtenues par l'intermédiaire de la configuration géométrique de ces languettes.

5. Filtre à liquide selon la revendication 1 ou 2,
**caractérisé en ce que**
les portées de guidage (21, 22) présentent des zones d'entrée.

6. Filtre à liquide selon une des revendications précédentes,
**caractérisé en ce que**
dans le tube de soutien (15) se trouve une soupape de surpression (25 - 28).

7. Filtre à liquide selon la revendication 6,
**caractérisé en ce que**
la soupape de surpression (25 - 28) présente un élément d'étanchéité (29) et est fixée sur l'élément de soutien (15) avec étanchéité au liquide, au moyen d'éléments d'étanchéité ou par une liaison soudée.

8. Filtre à liquide selon la revendication 1,
**caractérisé en ce que**
sur le tube de soutien (15) est prévue une portée d'appui (19) de forme annulaire, sur laquelle s'appliquent les éléments d'arrêt (18) du couvercle (11), tandis que sur le couvercle (11) sont prévues des portées de guidage (21, 22) avec une zone d'entrée et sur lesquelles s'appuient les languettes d'arrêt du tube de soutien (15).
